# EUROPEAN PATENT SPECIFICATION

(11) **EP 4 082 679 B1**
(45) Date of publication and mention of the grant of the patent: **22.01.2025**
(21) Application number: 20906669.5
(22) Date of filing: 09.12.2020
(51) Int. Cl.: B07C 5/36, B07C 5/342, G01N 21/85

(54) **OPTICAL SORTING DEVICE**
OPTISCHE SORTIERVORRICHTUNG
DISPOSITIF DE TRI OPTIQUE

(30) Priority: 24.12.2019 JP 2019233200; 24.12.2019 JP 2019233205
(43) Date of publication of application: 02.11.2022
(73) Proprietor: Satake Corporation, Chiyoda-ku Tokyo 101-0021 (JP)
(72) Inventor: KAWAMURA Yoichi, Tokyo 101-0021 (JP)
(74) Representative: Haseltine Lake Kempner LLP
(86) International application number: PCT/JP2020/045894
(87) International publication number: WO 2021/131712

(56) References cited:
- EP-A1- 3 718 648
- WO-A1-2017/043431
- WO-A1-2019/155764
- WO-A1-2019/155764
- JP-A- 2005 083 775
- JP-A- 2005 180 958
- JP-A- 2010 184 226
- JP-A- H10 180 195
- US-A- 4 848 590
- US-A- 4 848 590
- US-B2- 10 088 425

## Description

### [Technical Field]

The present invention relates to an optical sorting device that sorts grains such as cereal grains, beans, or resin pellets based on the color or the like.

### [Background Art]

Grains such as cereal grains, beans, or resin pellets may be sorted into non-defective grains and defective grains based on the color or the like to remove the defective grains, or mixed foreign matters are removed in some cases.

For example, Patent Literature 1 discloses an optical grain sorting device in which an optical detecting unit is provided below a chute along which cereal grains flow down, a falling trajectory of grains flowing down from the chute being interposed between the chute and the optical detecting unit, an ejector nozzle is provided further below the optical detecting unit, and the optical detecting unit detects whether a falling-down grain is a non-defective grain or a defective grain, and a grain determined as a defective grain is removed from flowing-down grains with high-pressure ejected air ejected from the ejector nozzle.

The optical grain sorting device as described in Patent Literature 1 above removes a defective grain fallen down from the chute with ejected air. However, some grains do not fall down along a constant flying trajectory due to turbulence of the flying attitude in the air, and thus, ejected air may not hit a defective grain to cause a sorting mistake.

In order to improve sorting performance, the Applicant has filed Patent Literature 2. This is a device in which a chute of a sorting unit is provided with an optical detection slit and a sorting and removal slit.

Patent Literature 3 discloses: Apparatus for sorting pieces of non-ferrous scrap metal into a plurality of components, each component being a particular metal type, feeds the pieces into a vertically disposed sorting zone. The pieces fall down a steeply inclined guide member under the influence of gravity and they pass a pair of timing devices which are spaced apart along the guide member, each timing device being a light source on one side of the path of the pieces and a light detector on the other side. The timing devices provide signals representing not only timing but also size and velocity. The pieces then pass an x-ray analysis system including a source of high energy rays to induce x-ray fluorescence and a detector to detect this fluorescence. The detector provides signals indicating the metal type for each piece of scrap. The pieces then fall past a plurality of blast nozzles spaced apart along the guide member. Each nozzle has a control which turns on a flow of fluid such as air through the nozzle to deflect a particular piece into a specific deflection path. Each piece is thus directed into a deflection path for a specific component.

Patent Literature 4 discloses an optical sorter intended to simply calculate the positional accuracy of a constituent member attached to a frame without welding distortion occurring in the frame.

### [Citation List]

### [Patent Literature]

[Patent Literature 1] Japanese Patent Laid-Open No. 2014-157119
[Patent Literature 2] Japanese Patent Application No. 2019-209821
[Patent Literature 3] US Patent Publication No. 4,848,590 A
[Patent Literature 4] International Patent Publication No. WO 2019/155764 A1

### [Summary of Invention]

### [Technical Problem]

The optical sorting device as in Patent Literature 2 requires an optical detecting unit to be provided in correspondence to the optical detection slit of the chute, and an ejector nozzle to be provided in correspondence to the sorting and removal slit further below the optical detection slit. This results in size increase as a whole, burdensome assembling, and unsuitableness to manual or robot mass production. In particular, in such a case of attaching the device to a rice husking machine, such problems are pronounced.

In addition, it is required to minimize the distance between the optical detection slit and the sorting and removal slit, achieve size reduction, and improve sorting accuracy.

Furthermore, in the optical sorting device as in Patent Literature 2, the optical detection slit on the chute is formed. Thus, dust and the like including dust and powder particles produced by flowing-down grains could enter the rear surface side of the chute through the optical detection slit, and adhere to equipment installed on the rear surface side of the chute to cause adverse effects. In particular, in such a case of attaching the device to a rice husking machine, optical equipment is likely to degrade significantly in performance due to adhesion of dust and the like, and a sorting mistake is likely to occur.

In addition, fitting a translucent plate in the optical detection slit to prevent dust and the like from entering is also conceivable. However, when dust and the like adhere to the translucent plate, translucency may degrade. Furthermore, when trying to remove dust and the like adhering to the translucent plate, it is necessary to stop flow-down of grains so as to operate removing means on the front surface side of the chute, which interrupts a sorting operation.

An objective to be achieved by the present invention is to provide an optical sorting device which is compact, easy to assemble, and suited to mass production. An objective to be achieved by the present invention is to provide an optical sorting device which minimizes the distance between the optical detection slit and the sorting and removal slit, has high sorting accuracy, and is compact. In addition, an objective to be achieved by the present invention is to provide an optical sorting device which prevents dust and the like produced on the front surface side of the chute from entering the rear surface side through the optical detection slit without providing the optical detection slit with a translucent plate, so that a sorting mistake is less likely to occur.

### [Solution to Problem]

According to the present invention, there is provided an optical sorting device as defined in the claims. A rice husking and sorting machine including the optical sorting device is provided also.

### [Advantageous Effects of Invention]

Since the present invention blows air to an object to be sorted flowing down along a stable trajectory on the front surface of the chute through the sorting and removal slit, an object to be sorted that should be removed can be reliably hit with ejected air without being affected by turbulence of an air flow or the like, a sorting mistake is less likely to occur, and the accuracy is improved.

Since the rear-side illuminating portion and the ejector nozzle are attached to a single base member, the rear-side illuminating portion and the ejector nozzle can be installed easily at the same time merely by attaching the base member. As a result, manual or robot mass production can be easily performed. In addition, since the device is reduced in size, and the distance between the rear-side illuminating portion and the ejector nozzle, that is, the distance between the optical detection slit and the sorting and removal slit is reduced, the trajectory of mixed grains after passing through the light detection slit and before reaching the sorting and removal slit is less likely to change, and the sorting accuracy increases.

Additionally, since the base member or the rear-side illuminating portion includes a positioning protrusion to be inserted into the optical detection slit to position the base member to the chute, positioning can be easily performed at the time of attachment.

Additionally, since the base member or the ejector nozzle includes a positioning protrusion to be inserted into the sorting and removal slit to position the base member to the chute, positioning can be easily performed at the time of attachment.

Additionally, by storing the front-side illuminating portion, the light receiving part, and the optical path in the front-side housing, assembling is further facilitated, and the front-side illuminating portion, the light receiving part, and the optical path are protected from dust and the like.

Additionally, if the base member serves as the rear-side housing, and the rear-side illuminating portion, the ejector nozzle, and the manifold are stored in the rear-side housing, the device can further be reduced in size, and dust and the like are less likely to adhere to the rear-side illuminating portion.

Additionally, by extending the projecting piece to the outer surface of the rear-side housing, and providing the electromagnetic valve with an engaging stop to be brought into snap engagement with the projecting piece, the electromagnetic valve can be easily attached to the rear-side housing.

Additionally, if the ejector nozzle is coupled to the manifold and the electromagnetic valve installed outside the rear-side housing with an air hose, a manifold and an electromagnetic valve which are commercially available and common can be used.

Additionally, since the rear-side illuminating portion has the light source and the reflector that reflects light radiated from the light source toward the optical detection slit, and the light source, the reflector, and the ejector nozzle are arranged in the order presented from the upstream side of the chute, the distance between the optical detection slit and the sorting and removal slit can be reduced further, and size reduction and increased sorting accuracy can be achieved.

In addition, since dust and the like produced from objects to be sorted flowing down on the front surface of the chute do not enter the rear surface side of the chute without providing the optical detection slit with a translucent plate, dust and the like are less likely to adhere to equipment installed on the rear surface side of the chute. It is possible to prevent dust from adhering particularly to the rear-side optical inspection part, prevent performance from significantly degrading, and prevent a sorting mistake from occurring.

In addition, since the air curtain prevents dust and the like from entering, translucency is not lost as in a device in which dust and the like are blocked by a translucent plate.

Although a device that transmits light through a translucent plate requires the sorting operation to be interrupted when removing dust and the like, the present invention eliminates such a necessity.

Additionally, since the slit air nozzle is arranged such that air of the air curtain is ejected from the upstream side toward the downstream side of the chute, flow-down of the objects to be sorted can be less affected even in a case in which air of the air curtain comes out of the optical detection slit to the front surface side of the chute.

Additionally, since the ejector unit has the ejector nozzle capable of ejecting air to the objects to be sorted on the downstream side of the optical detection slit, the air discharge part is provided on the downstream side of the air curtain ejected from the slit air nozzle, and the surface of the air discharge part opposite to the slit air nozzle is inclined toward the downstream side with distance from the optical detection slit, air of the air curtain efficiently flows toward the air discharge part without flowing out of the optical detection slit to the front surface side of the chute. Thus, air ejection from the ejector nozzle arranged on the downstream side is not affected.

Additionally, since the rear-side optical inspection part includes the rear translucent plate that blocks circulation of air between the slit air nozzle and at least one of the illuminating portion and the light receiving portion that the rear-side optical inspection part has, the rear-side optical inspection part can be protected from dust and the like.

Additionally, since the rear translucent plate air nozzle capable of forming the air curtain that prevents dust and the like from adhering to the rear translucent plate is provided for the rear-side optical inspection part on the slit air nozzle side of the rear translucent plate, dust and the like can be prevented from adhering to the rear translucent plate.

Additionally, the rear-side optical inspection part includes the rear translucent plate that blocks circulation of air between the slit air nozzle and at least one of the illuminating portion and the light receiving portion that the rear-side optical inspection part has, the rear translucent plate air nozzle capable of forming the air curtain that prevents dust and the like from adhering to the rear translucent plate is provided for the rear translucent plate on the slit air nozzle side, the air discharge part is provided on the downstream side of the air curtain ejected from the rear translucent plate air nozzle, and the air discharge part also discharges the air curtain ejected from the slit air nozzle. Thus, the air discharge part can be shared, and a compact configuration can be achieved.

Additionally, the optical inspection unit has the front-side optical inspection part having the illuminating portion that emits light toward the optical detection slit and the light receiving portion that receives at least one of transmitted light and reflected light from the sorting unit of the light emitted from the illuminating portion, at least one of the illuminating portion and the light receiving portion being arranged on the front surface side of the chute, the front-side optical inspection part includes the front translucent plate that blocks circulation of air between the chute and at least one of the illuminating portion and the light receiving portion that the front-side optical inspection part has, and the front translucent plate air nozzle capable of forming the air curtain that prevents dust and the like from adhering to the front translucent plate is provided for the front translucent plate on the chute side. Thus, the front-side optical inspection part can be protected from dust and the like, and dust and the like can be prevented from adhering to the front translucent plate.

Additionally, since the front translucent plate air nozzle is arranged such that the formed air curtain is ejected to be gradually distant from the flowing down direction of the objects to be sorted, flowing down of the objects to be sorted on the chute is not affected.

### [Brief Description of Drawings]

[Figure 1] Figure 1 is a cross-sectional view of a sorting unit according to a first embodiment of the present invention.
[Figure 2] Figure 2 is a cross-sectional view of an optical sorting device showing the first embodiment of the present invention.
[Figure 3] Figure 3 is a perspective view of a chute according to the first and fourth embodiments of the present invention.
[Figure 4] Figure 4 is a magnified cross-sectional view of an essential part of the optical sorting device showing the first embodiment of the present invention.
[Figure 5] Figure 5 is a magnified cross-sectional view of an essential part of an optical sorting device showing a second embodiment of the present invention.
[Figure 6] Figure 6 is a cross-sectional view of an optical sorting device showing a third embodiment of the present invention.
[Figure 7] Figure 7 is a cross-sectional view of a sorting unit according to a fourth embodiment of the present invention.
[Figure 8] Figure 8 is a cross-sectional view of an optical sorting device showing the fourth embodiment of the present invention.
[Figure 9] Figure 9 is a magnified cross-sectional view of an essential part of the optical sorting device showing the fourth embodiment of the present invention.
[Figure 10] Figure 10 is a cross-sectional view of an optical sorting device showing a fifth embodiment of the present invention.

### [Description of Embodiments]

Hereinafter, embodiments of the present invention will be described with reference to the drawings or the like. Note that the present invention is obviously not limited to the embodiments.

### [First embodiment]

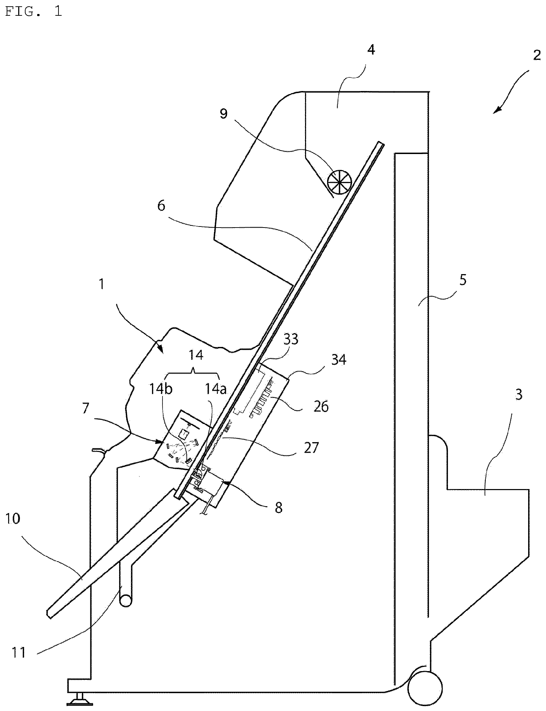

Hereinafter, a first embodiment of the present invention will be described along with Figures 1 to 4.

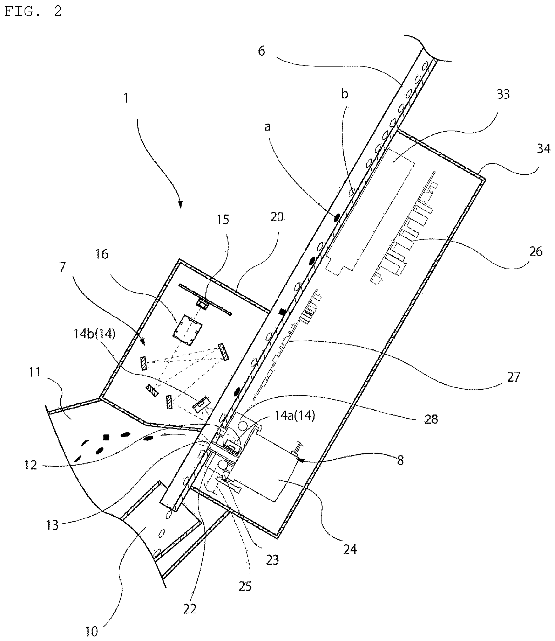

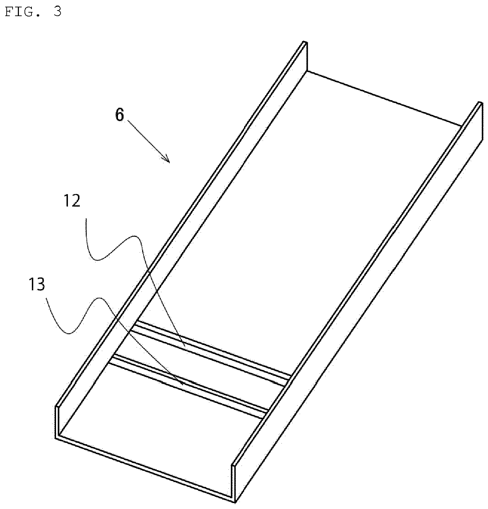

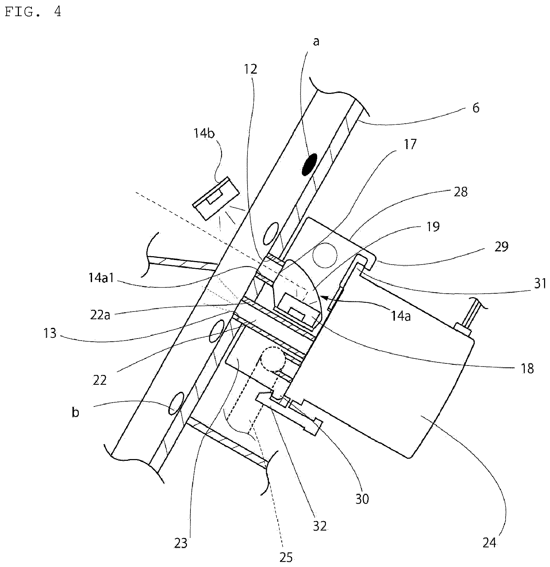

Figure 1 is a cross-sectional view of a sorting machine in the first embodiment, Figure 2 is a cross-sectional view of an optical sorting device in the first embodiment, Figure 3 is a perspective view of a chute in the first embodiment, and Figure 4 is a magnified cross-sectional view of an essential part of the optical sorting device in the first embodiment.

In the first embodiment, as shown in Figure 1, an optical sorting device 1 is mounted on a sorting unit 2 of a rice husking and sorting machine not shown. The sorting unit 2 is a secondary sorting unit installed adjacent to a downstream side of a rice husking unit not shown.

In the rice husking unit, unhusked rice is separated into the husk and brown rice, and the husk is primarily sorted. Mixed grains (objects to be sorted) composed of brown rice still containing foreign matters such as husks primarily sorted are sent to the sorting unit 2, and only the foreign matters are sorted and removed from the mixed grains by the optical sorting device 1.

A raw material hopper 3 to which mixed grains are delivered from the rice husking unit is provided at a lower part of the sorting unit 2. A storage tank 4 is installed at an upper part of the optical sorting device 1 above the sorting unit 2. The mixed grains delivered into the raw material hopper 3 are lifted by a grain lifting unit 5 to the storage tank 4.

The mixed grains lifted to the storage tank 4 are supplied to an upper end of a chute 6 via a rotary valve 9. A brown rice discharge channel 10 that discharges brown rice not eliminated by an ejector unit 8 of the optical sorting device 1 is coupled to a lower part of the chute 6. A foreign matter discharge channel 11 that discharges foreign matters eliminated by the ejector unit 8 of the optical sorting device 1 is also coupled to the lower part of the chute 6.

As shown in Figure 2, the optical sorting device 1 includes the inclined chute 6 on which mixed grains flow down on its front surface. The optical sorting device 1 includes an optical inspection unit 7 arranged opposite to the front surface side and the rear surface side of the chute 6. The optical sorting device 1 includes the ejector unit 8 that, based on an inspection result obtained by the optical inspection unit 7, determines a foreign matter a and a brown rice b among mixed grains, and eliminates only the foreign matter a from the mixed grains.

As shown in Figure 3, an optical detection slit 12 is formed on the chute 6 in a manner orthogonally crossing the flowing down direction of the mixed grains. A sorting and removal slit 13 is formed on the chute 6 on a downstream side of the optical detection slit 12 in a manner orthogonally crossing the flowing down direction of the mixed grains. The optical detection slit 12 and the sorting and removal slit 13 are formed at close positions.

The widths of the optical detection slit 12 and the sorting and removal slit 13 are set in accordance with the size and weight of the mixed grains flowing down on the chute 6, a removing capability of the ejector unit 8, and the like.

As shown in Figure 2, the optical inspection unit 7 includes an illuminating part 14 that emits light to mixed grains flowing down on the front surface of the chute 6. The optical inspection unit 7 includes a light receiving part 15 such as a CCD camera that receives transmitted light and reflected light from the mixed grains to which light has been emitted from the illuminating part 14. The optical inspection unit 7 includes an optical path 16 that sends the transmitted light and the reflected light to the light receiving part 15.

The optical path 16 is composed of a plurality of reflective plates and a lens, and the light receiving part 15 and the optical path 16 are stored integrally in a front-side housing 20 together with a front-side illuminating portion 14b.

The front-side housing 20 is arranged on the front surface side of the chute 6 at a position opposite to the optical detection slit 12, and the front-side illuminating portion 14b faces the optical detection slit 12.

Then, light from the front-side illuminating portion 14b is emitted to a grain (the foreign matter a or the brown rice b) passing through the optical detection slit 12, and reflected light from the grain reaches the light receiving part 15 through the optical path 16.

As shown in Figure 4, the illuminating part 14 includes a rear-side illuminating portion 14a installed on the rear surface side of the chute 6, and the front-side illuminating portion 14b installed on the front surface side of the chute 6.

The rear-side illuminating portion 14a includes a light diffuser plate 17 which is an opaque white translucent plate, a light source 18 such as an LED, and the reflector 19 which is a concave mirror.

The front-side illuminating portion 14b is a light source such as an LED.

The light diffuser plate 17 is provided with its planar direction being in parallel to the flowing down direction on the chute 6.

The light source 18 is provided directly above and in close contact with an ejector nozzle 22, and is arranged so as to radiate light in the direction opposite to the flowing down direction on the chute 6. The light source 18 is in the form of a flat plate, and arranged with its planar direction being in parallel to an ejecting direction in which the ejector nozzle 22 extends.

The reflector 19 reflects light radiated from the light source 18 toward the light diffuser plate 17.

With such an arrangement, the ejector nozzle 22 and the rear-side illuminating portion 14a can be brought close to each other, and the optical detection slit 12 and the sorting and removal slit 13 can be brought close to each other.

The rear-side illuminating portion 14a includes an opening member 14a1 through which light is output to flowing-down mixed grains. The opening member 14a1 forms a positioning protrusion that protrudes from a rear-side housing 28 which is a base member. The light diffuser plate 17 is provided on the light source 18 side of the opening member 14a1.

When the opening member 14a1 which is the positioning protrusion is inserted into the optical detection slit 12, the rear-side housing 28 to which the rear-side illuminating portion 14a has been attached is positioned on the chute 6.

In the present embodiment, the positioning protrusion is the opening member 14a1 of the rear-side illuminating portion 14a, but a similar component may be provided on the portion of the rear-side housing 28 to which the rear-side illuminating portion 14a is to be attached to configure a positioning protrusion on the base member.

The ejector unit 8 includes a plurality of ejector nozzles 22, a manifold 23 that distributes high-pressure air to the ejector nozzles 22, and an electromagnetic valve 24 that controls air ejection from the ejector nozzles 22.

An air supply pipe 25 is connected to the manifold 23, and high-pressure air is supplied from a compressor or the like to the manifold 23 through the air supply pipe 25.

In addition, the electromagnetic valve 24 is connected to the light receiving part 15 of the optical inspection unit 7 with a valve driving circuit substrate 26 and a signal processing substrate 27 interposed therebetween (Figure 2).

A leading end 22a of the ejector nozzle 22 forms the positioning protrusion that protrudes from the rear-side housing 28 which is the base member.

When the leading end 22a of the ejector nozzle 22 which is the positioning protrusion is inserted into the sorting and removal slit 13, the rear-side housing 28 to which the ejector unit 8 has been attached is positioned on the chute 6.

In the present embodiment, the positioning protrusion is the leading end 22a of the ejector nozzle 22, but a similar component may be provided on the portion of the rear-side housing 28 to which the ejector nozzle 22 is to be attached to configure a positioning protrusion on the base member.

The box-like rear-side housing 28 is attached as the base member to the rear surface side of the chute 6. The rear-side illuminating portion 14a, the ejector nozzles 22, and the manifold 23 are integrally stored in the rear-side housing 28. In other words, the rear-side illuminating portion 14a, the ejector nozzles 22, and the manifold 23 can be unitized by the rear-side housing 28 which is the base member.

A front surface of the rear-side housing 28 opposite to the rear surface of the chute 6 is open so as to allow the opening member 14a1 of the rear-side illuminating portion 14a and the leading end 22a of the ejector nozzle 22 which serve as the positioning protrusions to protrude.

The back surface of the rear-side housing 28 is provided with openings for the manifold 23 and the electromagnetic valve 24 to communicate with each other and the ejector nozzle 22 and the electromagnetic valve 24 to communicate with each other.

A hook part 29 is formed at one end of the back surface of the rear-side housing 28, and a projecting piece 30 is extended at the other end of the back surface.

A flange 31 is formed at one end of the front surface of the electromagnetic valve 24, and a locking stop 32 to be brought into snap engagement with the projecting piece 30 is provided on the other end of the front surface.

The electromagnetic valve 24 is inclined to insert the flange 31 into the hook part 29, and then the electromagnetic valve 24 is turned to bring the locking stop 32 into snap engagement with the projecting piece 30. The electromagnetic valve 24 can thereby be attached to the back surface (outer surface) of the rear-side housing 28 with a single touch to be fitted over the manifold 23.

At replacement or the like of the electromagnetic valve 24, the electromagnetic valve 24 can be easily detached from the rear-side housing 28 by pivoting the locking stop 32 to be moved away from the projecting piece 30.

Assembling on the rear side of the chute 6 is performed in the following manner.

The rear-side illuminating portion 14a, the ejector nozzles 22, and the manifold 23 are stored in the rear-side housing 28 to be unitized. The opening member 14a1 of the rear-side illuminating portion 14a and the leading end 22a of the ejector nozzle 22 which serve as the positioning protrusions protrude from the front surface of the rear-side housing 28.

The opening member 14a1 of the rear-side illuminating portion 14a and the leading end 22a of the ejector nozzle 22 which serve as the positioning protrusions are respectively inserted into the optical detection slit 12 and the sorting and removal slit 13 to be positioned, so that the rear-side housing 28 is attached to the rear surface of the chute 6.

The rear-side housing 28 is installed such that the opening member 14a1 of the rear-side illuminating portion 14a faces the optical detection slit 12, and the leading end 22a of the ejector nozzle 22 faces the sorting and removal slit 13.

The rear-side housing 28 is further fixed by engaging the stop with the rear surface of the chute 6 or by means of a fixture such as a screw.

The electromagnetic valve 24 is attached to the back surface of the rear-side housing 28 at appropriate timing.

The rear-side housing 28, the valve driving circuit substrate 26, the signal processing substrate 27, and a power source 33 that drives the optical sorting device 1 are stored in a box 34, and the box 34 is installed on the rear surface side of the chute 6 (Figures 1 and 2).

Light from the rear-side illuminating portion 14a is emitted to a grain passing above the optical detection slit 12 through the optical detection slit 12, and light transmitted through the grain reaches the light receiving part 15 through the optical path 16.

Light from the front-side illuminating portion 14b is emitted to the grain passing above the optical detection slit 12, and light reflected by the grain reaches the light receiving part 15 through the optical path 16.

A light reception signal of the light receiving part 15 is sent to the signal processing substrate 27. A signal level of the light reception signal is compared with a threshold value in the signal processing substrate 27, and it is determined whether the grain is the foreign matter a or the brown rice b.

A determination result obtained by the signal processing substrate 27 is transmitted to the valve driving circuit substrate 26. Opening/closing of the electromagnetic valve 24 is controlled by the valve driving circuit substrate 26.

In a case in which the grain is determined as the foreign matter a, high-pressure air is ejected from one of the ejector nozzles 22 selected by opening/closing control of the electromagnetic valve 24 when the grain passes through the sorting and removal slit 13. The foreign matter a is eliminated from the front surface of the chute 6 with the high-pressure air ejected from the ejector nozzle 22. The eliminated foreign matter a is discharged to the foreign matter discharge channel 11.

The brown rice b not having been eliminated is sent to the next step through the brown rice discharge channel 10.

### [Second embodiment]

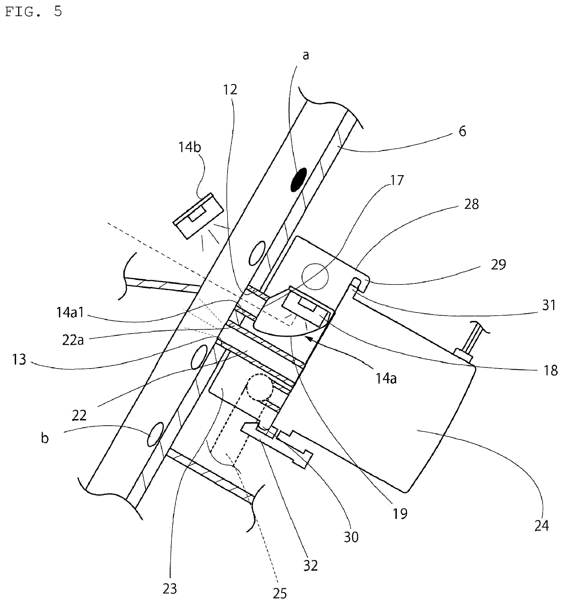

Hereinafter, a second embodiment according to the present invention will be described along with Figure 5. Note that description of points similar to those of the first embodiment will be omitted, and different points will mainly be described.

In the second embodiment, the light source 18 of the rear-side illuminating portion 14a is installed oppositely so as to radiate light toward the ejector nozzles 22.

The reflector 19 is provided directly above and in close contact with the ejector nozzles 22.

Light radiated from the light source 18 is reflected by the reflector 19 toward the light diffuser plate 17, and emitted to mixed grains through the optical detection slit 12. In other words, the light source 18, the reflector 19, and the ejector nozzles 22 are arranged in an order presented from the upstream side of the chute 6 in the flowing down direction on the chute 6.

The reflector 19 that can have a smaller space (height in the flowing down direction on the chute 6) than the light source 18 is brought into close contact with the ejector nozzles 22 to arrange the light source 18 on the upstream side of the reflector 19 in the flowing down direction on the chute 6. The opening member 14a1 of the rear-side illuminating portion 14a can thereby be brought closer to the ejector nozzles 22, so that the distance between the optical detection slit 12 and the sorting and removal slit 13 can be reduced further. Thus, sorting accuracy can be improved.

### [Third embodiment]

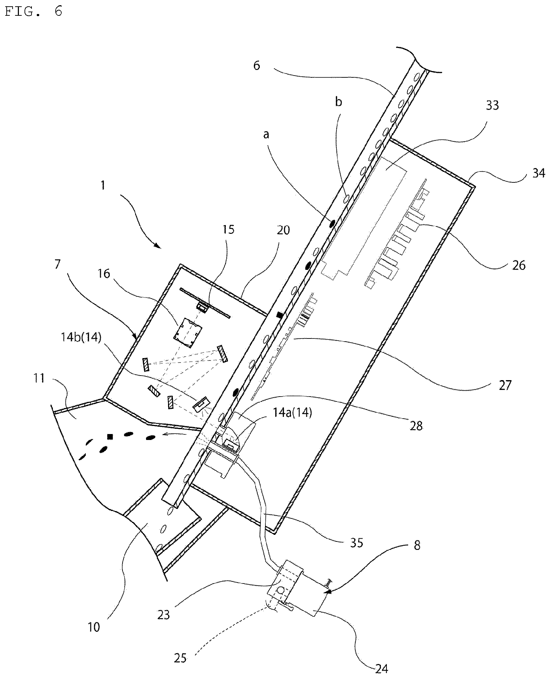

Hereinafter, a third embodiment according to the present invention will be described along with Figure 6. Note that description of points similar to those of the first embodiment or the second embodiment will be omitted, and different points will mainly be described.

In the third embodiment, the rear-side illuminating portion 14a and the ejector nozzles 22 are installed in the rear-side housing 28, and the manifold 23 and the electromagnetic valve 24 are installed outside the rear-side housing 28. Specifically, the manifold 23 and the electromagnetic valve 24 are provided outside the box 34.

The electromagnetic valve 24 is fitted over the manifold 23, and coupled to the ejector nozzles 22 with an air hose 35.

It is not necessary to provide the rear-side housing 28 with a hook part, a projecting piece, or the like for attaching the electromagnetic valve 24.

### [Fourth embodiment]

Hereinafter, a fourth embodiment of the present invention will be described along with Figures 3, and 7 to 9.

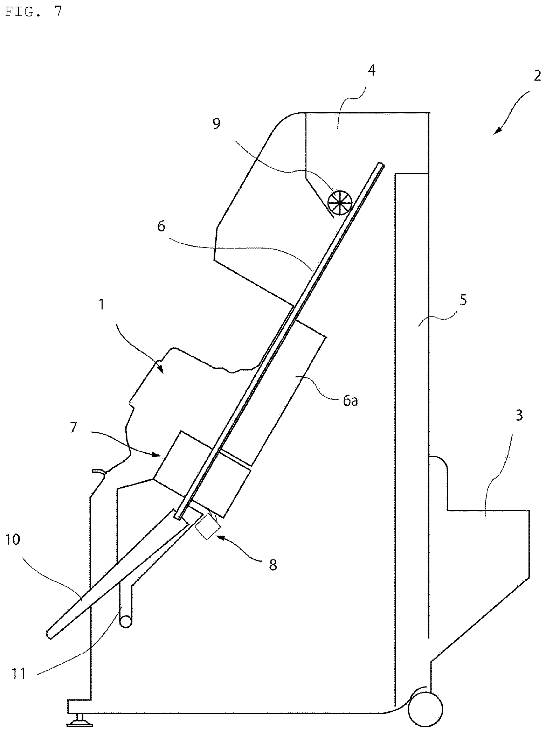

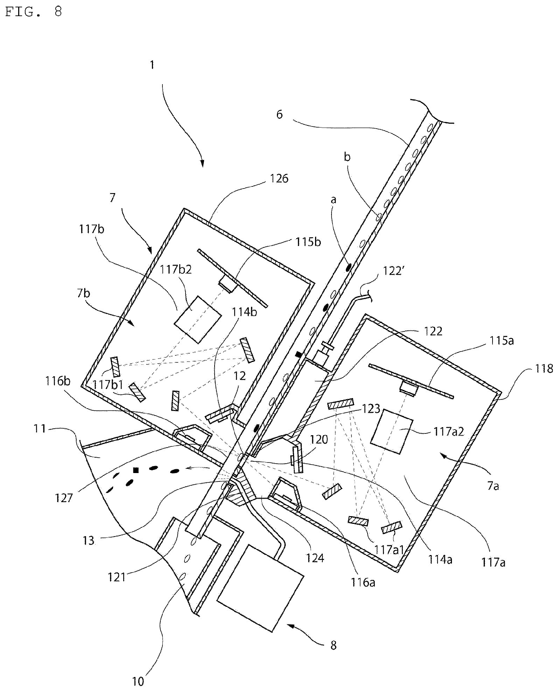

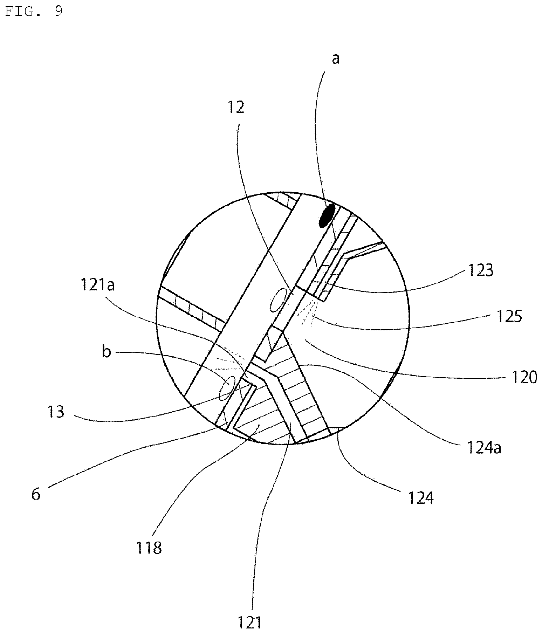

Figure 7 is a cross-sectional view of a sorting machine in the fourth embodiment, Figure 3 is a perspective view of a chute in the fourth embodiment, Figure 8 is a cross-sectional view of an optical sorting device in the fourth embodiment, and Figure 9 is a magnified cross-sectional view of an essential part of the optical sorting device in the fourth embodiment.

In the fourth embodiment, as shown in Figure 7, the optical sorting device 1 is mounted on a sorting unit of a rice husking and sorting machine not shown. The sorting unit 2 is a secondary sorting unit installed adjacent to the downstream side of a rice husking unit not shown.

Unhusked rice is separated into the husk and brown rice in the rice husking unit, and the husk is primarily sorted. Mixed grains (objects to be sorted) composed of brown rice still containing foreign matters such as husks primarily sorted are sent to the sorting unit 2, and only the foreign matters are sorted and removed from the mixed grains by the optical sorting device 1.

A raw material hopper 3 to which mixed grains are delivered from the rice husking unit is provided at a lower part of the sorting unit 2. A storage tank 4 is installed at an upper part of the optical sorting device 1 above the sorting unit 2. The mixed grains delivered into the raw material hopper 3 are lifted by the grain lifting unit 5 to the storage tank 4.

The mixed grains lifted to the storage tank 4 are supplied to an upper end of a chute 6 via a rotary valve 9. A brown rice discharge channel 10 that discharges brown rice not eliminated by an ejector unit 8 of the optical sorting device 1 is coupled to the lower part of the chute 6. A foreign matter discharge channel 11 that discharges foreign matters eliminated by the ejector unit 8 of the optical sorting device 1 is also coupled to the lower part of the chute 6.

The optical sorting device 1 includes the inclined chute 6 on which mixed grains flow down on its front surface. The optical sorting device 1 includes an optical inspection unit 7 that performs optical inspection to the mixed grains flowing down on the front surface of the chute 6. The optical sorting device 1 includes the ejector unit 8 that, based on an inspection result obtained by the optical inspection unit 7, determines a foreign matter a and a brown rice b among mixed grains, and eliminates only the foreign matter a from the mixed grains.

A box 6a that stores a signal processing substrate, an electromagnetic valve driving circuit substrate, a power source, and the like, neither shown, is attached to the rear surface of the chute 6.

As shown in Figure 3, the optical detection slit 12 is formed on the chute 6 in a manner orthogonally crossing the flowing down direction of the mixed grains. The sorting and removal slit 13 is formed on the chute 6 on the downstream side of the optical detection slit 12 in the manner orthogonally crossing the flowing down direction of the mixed grains. The optical detection slit 12 and the sorting and removal slit 13 are formed at close positions.

The widths of the optical detection slit 12 and the sorting and removal slit 13 are set in accordance with the size and weight of the mixed grains flowing down on the chute 6, a removing capability of the ejector unit 8, and the like.

As shown in Figure 8, the optical inspection unit 7 includes a rear-side optical inspection part 7a and a front-side optical inspection part 7b installed on the rear surface side and the front surface side of the chute 6 at positions with the optical detection slit 12 interposed therebetween.

The rear-side optical inspection part 7a includes a rear-side illuminating portion 114a such as an LED, a rear-side light receiving portion 115a such as a CCD camera, a rear-side background illuminating portion 116a to be opposite to the front-side optical inspection part 7b, and a rear-side optical path 117a having a plurality of reflective plates 117a1 and a lens 117a2, and is stored in a rear-side housing 118.

As shown in Figures 8 and 9, a rear-side opening 120 through which light passes is formed in the rear-side housing 118. The rear-side housing 118 is attached to the rear surface side of the chute 6 in a manner that the rear-side opening 120 conforms to the optical detection slit 12.

The rear-side opening 120 is formed across the entire widthwise length of the optical detection slit 12, and light radiated from the rear-side illuminating portion 114a is emitted to a grain passing above the optical detection slit 12 (the foreign matter a or the brown rice b) through the rear-side opening 120 and the optical detection slit 12.

As shown in Figure 9, an ejector nozzle 121 of the ejector unit 8 is incorporated in the rear-side housing 118. A leading end 121a of the ejector nozzle 121 is exposed at the outer surface of the rear-side housing 118 on a downstream side of the rear-side opening 120 on the chute 6 to face the sorting and removal slit 13. Specifically, the leading end 121a of the ejector nozzle 121 protrudes from the surface of the rear-side housing 118 on the rear surface side of the chute 6 to form a positioning protrusion.

When the leading end 121a of the ejector nozzle 121 which serves as the positioning protrusion is inserted into the sorting and removal slit 13, the rear-side housing 118 to which the ejector unit 8 has been attached is positioned on the chute 6.

As shown in Figures 8 and 9, an air chamber 122 to which air is supplied via an air supply pipe 122' is formed in the rear-side housing 118 on the upstream side of the rear-side opening 120 on the chute 6. A slit air nozzle 123 that ejects air from the air chamber 122 toward the rear-side opening 120 is disposed. An air curtain 125 can be formed by air ejected from this slit air nozzle 123.

The air discharge part 124 is formed so as to open to the outside of the rear-side housing 118 on the downstream side with the interposition of the rear-side opening 120 of the rear-side housing 118 and on the downstream side of the air curtain 125 ejected from the slit air nozzle 123.

The effective air curtain 125 is formed by air ejected from the slit air nozzle 123 and discharged from the air discharge part 124. This can prevent dust and the like from entering the rear-side optical inspection part 7a through the optical detection slit 12.

Air of the air curtain 125 is arranged so as to be ejected from the upstream side toward the downstream side of the chute 6 on the rear surface side of the optical detection slit 12. Accordingly, even in a case in which air of the air curtain 125 comes out to the front surface side of the chute 6 from the optical detection slit 12, an influence upon flow-down of mixed grains can be reduced.

As shown in Figure 9, a surface 124a of the air discharge part 124 opposite to the slit air nozzle 123 is inclined to the downstream side with distance from the optical detection slit 12. The air curtain 125 ejected from the slit air nozzle 123 thereby hits the opposite surface to be efficiently guided to a discharge port of the air discharge part 124. Thus, air of the air curtain 125 flows toward the discharge port of the air discharge part 124 without flowing out to the front surface side of the chute 6 through the optical detection slit 12. Therefore, air ejection from the ejector nozzle 121 arranged on the downstream side is not affected.

The rear-side housing 118 is further fixed by engaging the stop with the rear surface of the chute 6 or by means of a fixture such as a screw.

As shown in Figure 8, the front-side optical inspection part 7b includes a front-side illuminating portion 114b such as an LED, a front-side light receiving portion 115b such as a CCD camera, a front-side background illuminating portion 116b to be opposite to the rear-side optical inspection part 7a, and a front-side optical path 117b having a plurality of reflective plates 117b1 and a lens 117b2, and is stored in a front-side housing 126.

A front-side opening 127 through which light passes is formed in the front-side housing 126. The front-side housing 126 is installed on the front surface side of the chute 6 in a manner that the front-side opening 127 conforms to the optical detection slit 12.

The front-side opening 127 is formed across the entire widthwise length of the chute 6, and light radiated from the front-side illuminating portion 114b is emitted to a grain (the foreign matter a or the brown rice b) passing above the optical detection slit 12 through the front-side opening 127.

Light from the rear-side illuminating portion 114a is emitted from the rear surface side to the grain passing above the optical detection slit 12 through the rear-side opening 120 and the optical detection slit 12 of the rear-side housing 118. Light from the front-side illuminating portion 114b is emitted from the front surface side to the grain passing above the optical detection slit 12 through the front-side opening 127 of the front-side housing 126.

Light reflected by the grain and light transmitted through the grain advance into the rear-side housing 118 and the front-side housing 126 through the rear-side opening 120 and the front-side opening 127, and are received by the rear-side light receiving portion 115a and the front-side light receiving portion 115b via the rear-side optical path 117a and the front-side optical path 117b.

Light reception signals received by the rear-side light receiving portion 115a and the front-side light receiving portion 115b are sent to a signal processing substrate not shown but stored in the box 6a. A signal level of the light reception signals is compared with a threshold value in the signal processing substrate, and it is determined whether the grain is the foreign matter a or the brown rice b.

A determination result obtained by the signal processing substrate is transmitted to a valve driving circuit substrate not shown but stored in the box 6a. Opening/closing of an electromagnetic valve not shown of the ejector unit 8 is controlled by the valve driving circuit substrate.

In a case in which the grain is determined as the foreign matter a, high-pressure air is ejected from the ejector nozzle 121 selected by opening/closing control of electromagnetic valve when the grain passes through the sorting and removal slit 13. The foreign matter a is eliminated from the front surface of the chute 6 with the high-pressure air ejected from the ejector nozzle 121. The eliminated foreign matter a is discharged through the foreign matter discharge channel 11.

A grain which is the brown rice b not having been eliminated is sent to the next step through the brown rice discharge channel 10.

Since the optical detection slit 12 is blocked by the air curtain 125, dust and the like produced from mixed grains flowing down on the front surface of the chute 6 neither enter the rear surface side of the chute 6 nor adhere to the rear-side optical inspection part 7a in the rear-side housing 118 through the rear-side opening 120.

### [Fifth embodiment]

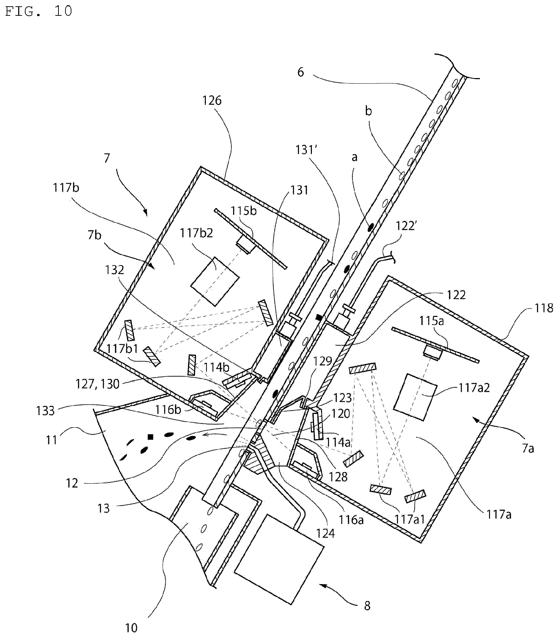

Hereinafter, a fifth embodiment according to the present invention will be described along with Figure 10. Note that description of points similar to those of the fourth embodiment will be omitted, and different points will mainly be described.

In the fifth embodiment, the rear-side optical inspection part 7a includes a rear translucent plate 128 that blocks circulation of air between the slit air nozzle 123 and the rear-side illuminating portion 114a, the rear-side background illuminating portion 116a, the rear-side optical path 117a, and the rear-side light receiving portion 115a.

Specifically, in the rear-side housing 118, the rear translucent plate 128 is fitted on the farther side of the rear-side opening 120 so as to cross the internal space. The rear-side opening 120 and the rear-side illuminating portion 114a, the rear-side background illuminating portion 116a, the rear-side optical path 117a, and the rear-side light receiving portion 115a of the rear-side optical inspection part 7a are blocked by the rear translucent plate 128.

Accordingly, the rear-side optical inspection part 7a is strictly protected even if dust and the like fly due to the air curtain 125.

A rear translucent plate air nozzle 129 is provided on the slit air nozzle 123 side on the chute 6 side of the rear translucent plate 128 and on the upstream side. The rear translucent plate air nozzle 129 is provided to communicate with the air chamber 122. The rear translucent plate air nozzle 129 is arranged so as to eject air along the rear translucent plate 128, and this air allows the air curtain to be formed along the rear translucent plate 128.

Therefore, dust and the like can be prevented from adhering to the rear translucent plate 128.

This air curtain is discharged through the opening of the air discharge part 124. In other words, this air discharge part 124 can discharge both the air curtain ejected from the rear translucent plate air nozzle 129 and the air curtain 125 ejected from the slit air nozzle 123.

Therefore, the air discharge part can be used in common, and a compact configuration can be achieved.

The front-side optical inspection part 7b includes a front translucent plate 130 that blocks circulation of air between the chute 6 and the front-side illuminating portion 114b, the front-side background illuminating portion 116b, the front-side optical path 117b, and the front-side light receiving portion 115b.

Specifically, the front translucent plate 130 is fitted in the front-side opening 127 of the front-side housing 126. The front surface side of the chute 6 and the front-side illuminating portion 114b, the front-side background illuminating portion 116b, the front-side optical path 117b, and the front-side light receiving portion 115b are blocked by the front translucent plate 130.

Dust and the like produced on the front surface side of the chute 6 are thereby prevented from entering the inside of the front-side housing 126, and the front-side optical inspection part 7b is strictly protected.

A front translucent plate air nozzle 132 is provided on the chute 6 side of the front translucent plate 130 and on the upstream side. The front translucent plate air nozzle 132 is provided to communicate with an air chamber 131. An air supply pipe 131' is coupled to the air chamber 131. The front translucent plate air nozzle 132 is arranged so as to eject air along the front translucent plate 130, and this air allows an air curtain to be formed along the front translucent plate 130.

Therefore, dust and the like can be prevented from adhering to the front translucent plate 130.

The direction in which the air curtain formed by the front translucent plate 130 and the front translucent plate air nozzle 132 is formed is provided so as to be gradually depart from the flowing down direction of mixed grains flowing down on the chute **6.** In other words, a space 133 between the front translucent plate 130 and the chute 6 is formed so as to be wider toward the downstream. Thus, the air curtain formed by the front translucent plate air nozzle 132 does not affect flowing down of mixed grains on the chute.

In addition, a lower part of the space 133 forms an air discharge part for the air curtain formed by the front translucent plate air nozzle 132.

### [Modifications]

The present invention is not limited to the above-described embodiments. For example, the following are also included.

In the present embodiment, the optical sorting device sorts foreign matters such as husks and brown rice, but can also be used for sorting other cereals, beans, resin pellets, or the like.

In the present embodiment, the rear-side illuminating portion does not include an optical path or a light receiving portion, but this is not a limitation. The rear-side illuminating portion may include an optical path and a light receiving portion.

In the present embodiment, the base member is the box-like rear-side housing, but may be a member having a plate-like shape on which the rear-side illuminating portion and the ejector nozzle can be placed for unitization, rather than storing components inside.

In the first and second embodiments, the projecting piece and the engaging stop are provided only at one-side ends of the rear-side housing and the electromagnetic valve, but, a projecting piece and an engaging stop to be brought into snap engagement with the projecting piece may be provided on each side end. In addition, the rear-side housing and the electromagnetic valve can also be joined with another locking instrument.

In the present embodiment, the positioning protrusions are provided so as to be inserted into both the optical detection slit 12 and the sorting and removal slit 13, but this is not a limitation.

The present embodiment is configured such that the positioning protrusions are inserted into the optical detection slit 12 and the sorting and removal slit 13 when positioning the base member on the chute, but this is not a limitation. For example, the rear-side housing 28 is attached to a place other than the slits on the rear surface of the chute 6 by hooking a stop or by means of a fixture such as a screw, but may be automatically aligned in position by aligning a stop-engaging position or a hole through which the fixture insertion is to be inserted.

In the present embodiment, the optical sorting device sorts foreign matters such as husks and brown rice, but can also be used for sorting other cereals, beans, resin pellets, or the like.

In the present embodiment, both the front-side optical inspection part and the rear-side optical inspection part include light source, optical paths, and light receiving portions, but this is not a limitation. For example, one of them may include a light source portion, and the other may include a light receiving portion alone.

In the present embodiment, air is ejected from the ejector nozzle installed on the rear surface side of the chute to the front surface side of the chute through the sorting and removal slit, but, air may be ejected to objects to be sorted released from the lower end of the chute without providing the sorting and removal slit. In this case, air may be ejected from the upper side toward the lower side.

In the present embodiment, the rear-side optical inspection part and the ejector nozzle are stored in the rear-side housing, and the front-side optical inspection part is stored in the front-side housing, but, the components stored in the rear-side housing and the front-side housing may be installed individually without providing the rear-side housing or the front-side housing. In this case, the slit air nozzle that forms the air curtain that blocks the light detection slit is provided for the chute.

### [Reference Signs List]

- 1: optical sorting device
- 2: sorting unit
- 3: raw material hopper
- 4: storage tank
- 5: grain lifting unit
- 6: chute
- 7: optical inspection unit
- 7a: rear-side optical inspection part
- 7b: front-side optical inspection part
- 8: ejector unit
- 9: rotary valve
- 10: brown rice discharge channel
- 11: foreign matter discharge channel
- 12: optical detection slit
- 13: sorting and removal slit
- 14: illuminating part
- 14a: rear-side illuminating portion
- 14b: front-side illuminating portion
- 15: light receiving part
- 16: optical path
- 17: light diffuser plate
- 18: light source
- 19: reflector
- 20: front-side housing
- 22: ejector nozzle
- 23: manifold
- 24: electromagnetic valve
- 25: air supply pipe
- 26: valve driving circuit substrate
- 27: signal processing substrate
- 28: rear-side housing
- 29: hook part
- 30: projecting piece
- 31: flange
- 32: locking stop
- 33: power source
- 34: box
- 35: air hose
- 114a: rear-side illuminating portion
- 114b: front-side illuminating portion
- 115a: rear-side light receiving portion
- 115b: front-side light receiving portion
- 116a: rear-side background illuminating portion
- 116b: front-side background illuminating portion
- 117a: rear-side optical path
- 117b: front-side optical path
- 118: rear-side housing
- 120: rear-side opening
- 121: ejector nozzle
- 122: air chamber
- 122': air supply pipe
- 123: slit air nozzle
- 124: air discharge part
- 125: air curtain
- 126: front-side housing
- 127: front-side opening
- 128: rear translucent plate
- 129: rear translucent plate air nozzle
- 130: front translucent plate
- 131: air chamber
- 131': air supply pipe
- 132: front translucent plate air nozzle
- 133: space

## Claims

1. An optical sorting device (1) comprising:
a chute (6) having an optical detection slit (12) and a sorting and removal slit (13) arranged on a downstream side of the optical detection slit, an object to be sorted flowing down on a front surface of the chute;
an optical inspection unit (7) having an illuminating part (14) having a rear-side illuminating portion (14a) installed on a rear surface side of the chute (6) and configured to emit light to the object to be sorted through an opening, a light receiving part (15) configured to receive at least one of transmitted light and reflected light from the object to be sorted of the light emitted from the illuminating part (14), and an optical path configured to send at least one of the transmitted light and the reflected light to the light receiving part, the optical inspection unit (7) being configured to inspect the object to be sorted flowing down on the front surface of the chute (6); and
an ejector unit (8) having an ejector nozzle (22) capable of ejecting air to the object to be sorted flowing down on the front surface of the chute (6), and configured to sort and remove the object to be sorted based on an inspection result obtained by the optical inspection unit (7),
the optical sorting device (1) **characterized by** comprising:
a base member attached to the rear surface side of the chute (6), wherein
at least the rear-side illuminating portion (14a) and the ejector nozzle (22) are attached to the base member, and the base member is installed such that the opening of the rear-side illuminating portion faces the optical detection slit (12), and a leading end of the ejector nozzle faces the sorting and removal slit (13), and
wherein the base member or the rear-side illuminating portion (14a) includes a positioning protrusion to be inserted into the optical detection slit (12) to position the base member on the chute (6).

2. The optical sorting device (1) according to claim 1, wherein the base member or the ejector nozzle (22) includes a positioning protrusion to be inserted into the sorting and removal slit (13) to position the base member on the chute (6).

3. The optical sorting device (1) according to claim 1 or 2, wherein
the base member is a rear-side housing (28),
the ejector unit (8) has the ejector nozzle (22), a manifold (23) configured to distribute high-pressure air to the ejector nozzle, and an electromagnetic valve (24) configured to control distribution of the manifold based on the inspection result obtained by the optical inspection unit (7), and
the rear-side illuminating portion (14a), the ejector nozzle (22), and the manifold (23) are stored in the rear-side housing (28), and the electromagnetic valve (24) is attached to an outer surface of the rear-side housing.

4. The optical sorting device (1) according to claim 3, wherein
a projecting piece is extended at the outer surface of the rear-side housing (28),
the electromagnetic valve (24) is provided with an engaging stop, and
the engaging stop is brought into snap engagement with the projecting piece to attach the electromagnetic valve (24) to the outer surface of the rear-side housing (28).

5. The optical sorting device (1) according to claim 1 or claim 2, wherein
the base member is a rear-side housing (28),
the ejector unit (8) has the ejector nozzle (22), a manifold (23) configured to distribute high-pressure air to the ejector nozzle, and an electromagnetic valve (24) configured to control distribution of the manifold based on the inspection result obtained by the optical inspection unit (7), and
the rear-side illuminating portion (14a) and the ejector nozzle (22) are stored in the rear-side housing (28), and the ejector nozzle is coupled to the manifold (23) and the electromagnetic valve (24) installed outside the rear-side housing (28) with an air hose (35).

6. The optical sorting device (1) according to any one of claims 1 to 5, wherein
the rear-side illuminating portion (14a) has a light source (18), and a reflector (19) configured to reflect light radiated from the light source toward the optical detection slit (12), and
the light source (18), the reflector (19), and the ejector nozzle (22) are arranged in an order presented from an upstream side of the chute (6).

7. The optical sorting device (1) according to any one of claims 1 to 6, comprising:
a front-side housing (20) on a front surface side of the chute (6), wherein
the illuminating part (14) has a front-side illuminating portion (14b) installed on the front surface side of the chute (6), and
at least the front-side illuminating portion (14b), the light receiving part (15), and the optical path are stored in the front-side housing (20).

8. A rice husking and sorting machine comprising the optical sorting device (1) according to any one of claims 1 to 7.

## Patentansprüche

1. Optische Vorrichtung (1), umfassend:
eine Rutsche (6) mit einem optischen Detektionsschlitz (12) und einem auf einer nachgelagerten Seite des optischen Detektionsschlitzes angeordneten Sortier- und Entnahmeschlitz (13), wobei ein zu sortierendes Objekt auf einer Stirnfläche der Rutsche nach unten rutscht;
eine optische Inspektionseinheit (7) mit einem Beleuchtungsteil (14), das einen rückseitigen Beleuchtungsabschnitt (14a) aufweist, der an einer rückseitigen Oberflächenseite der Rutsche (6) installiert ist und konfiguriert ist, um Licht zu dem zu sortierenden Objekt durch eine Öffnung zu emittieren, einem Lichtempfangsteil (15), das konfiguriert ist, um von dem zu sortierenden Objekt von dem von dem Beleuchtungsteil (14) emittierten Licht Sendelicht und/oder reflektiertes Licht zu empfangen, und einem optischen Pfad, der konfiguriert ist, um mindestens eines von dem Sendelicht und dem reflektierten Licht zu dem Lichtempfangsteil zu senden, wobei die optische Inspektionseinheit (7) konfiguriert ist, um das zu sortierende Objekt, das auf der vorderen Oberfläche der Rutsche (6) nach unten rutscht, zu inspizieren; und
eine Auswurfeinheit (8) mit einer Auswurfdüse (22), die in der Lage ist, Luft an das zu sortierende Objekt auszustoßen, das auf der Vorderfläche der Rutsche (6) nach unten rutscht, und die konfiguriert ist, um das zu sortierende Objekt basierend auf einem Inspektionsergebnis, das durch die optische Inspektionseinheit (7) erlangt wird, zu sortieren und zu entfernen,
wobei die optische Sortiervorrichtung (1), **dadurch gekennzeichnet ist, dass** sie umfasst:
ein Basisteil, das an der hinteren Oberflächenseite der Rutsche (6) befestigt ist, wobei
mindestens der rückseitige Beleuchtungsabschnitt (14a) und die Auswurfdüse (22) an dem Basiselement befestigt sind und das Basiselement derart eingebaut ist, dass die Öffnung des rückseitigen Beleuchtungsabschnitts dem optischen Erfassungsschlitz (12) zugewandt ist, und ein vorderes Ende der Auswurfdüse dem Sortier- und Entnahmeschlitz (13) zugewandt ist, und
wobei das Basiselement oder der rückseitige Beleuchtungsabschnitt (14a) einen Positioniervorsprung aufweist, der in den optischen Erfassungsschlitz (12) einzuführen ist, um das Basiselement auf der Rutsche (6) zu positionieren.

2. Optische Sortiervorrichtung (1) nach Anspruch 1, wobei das Basiselement oder die Auswurfdüse (22) einen Positioniervorsprung aufweist, der in den Sortier- und Entnahmeschlitz (13) einzuführen ist, um das Basiselement auf der Rutsche (6) zu positionieren.

3. Vorrichtung zur optischen Sortierung (1) nach Anspruch 1 oder 2, wobei
das Basisteil ein rückseitiges Gehäuse (28) ist,
die Auswurfeinheit (8) die Auswurfdüse (22), einen Verteiler (23), der konfiguriert ist, um Hochdruckluft an die Auswurfdüse zu verteilen, und ein elektromagnetisches Ventil (24) umfasst, das konfiguriert ist, um die Verteilung des Verteilers basierend auf dem Inspektionsergebnis, das durch die optische Inspektionseinheit (7) erlangt wird, zu steuern, und
sich der rückseitige Beleuchtungsabschnitt (14a), die Auswurfdüse (22) und der Verteiler (23) in dem rückseitigen Gehäuse (28) befinden und das Elektromagnetventil (24) an einer Außenfläche des rückseitigen Gehäuses befestigt ist.

4. Optische Sortiervorrichtung (1) nach Anspruch 3, wobei ein vorstehendes Teil an der Außenfläche des rückseitigen Gehäuses (28) verlängert ist,
das Elektromagnetventil (24) mit einem Einrastanschlag versehen ist, und
der Einrastanschlag mit dem Vorsprung in einen Einrasteingriff gebracht wird, um das Elektromagnetventil (24) an der Außenfläche des rückseitigen Gehäuses (28) zu befestigen.

5. Vorrichtung zur optischen Sortierung (1) nach Anspruch 1 oder Anspruch 2, wobei
das Basisteil ein rückseitiges Gehäuse (28) ist,
die Auswurfeinheit (8) die Auswurfdüse (22), einen Verteiler (23), der konfiguriert ist, um Hochdruckluft an die Auswurfdüse zu verteilen, und ein elektromagnetisches Ventil (24) umfasst, das konfiguriert ist, um die Verteilung des Verteilers basierend auf dem Inspektionsergebnis, das durch die optische Inspektionseinheit (7) erlangt wird, zu steuern, und
sich der rückseitige Beleuchtungsabschnitt (14a) und die Auswurfdüse (22) in dem rückseitigen Gehäuse (28) befinden, und die Auswurfdüse mit dem Verteiler (23) und dem außerhalb des rückseitigen Gehäuses (28) installierten Elektromagnetventil (24) mit einem Luftschlauch (35) gekoppelt ist.

6. Optische Vorrichtung (1) gemäß einem der Ansprüche 1 bis 5, wobei
der rückseitige Beleuchtungsabschnitt (14a) eine Lichtquelle (18) und einen Reflektor (19) aufweist, der konfiguriert ist, um von der Lichtquelle abgestrahltes Licht in Richtung des optischen Detektionsschlitzes (12) zu reflektieren, und
die Lichtquelle (18), der Reflektor (19) und die Auswurfdüse (22) in einer Reihenfolge angeordnet sind, die von einer der Rutsche (6) vorgelagerten Seite vorgegeben wird.

7. Optische Sortiervorrichtung (1) gemäß einem der Ansprüche 1 bis 6, umfassend:
ein frontseitiges Gehäuse (20) an einer stirnseitigen Oberflächenseite der Rutsche (6), wobei
das Beleuchtungsteil (14) einen vorderseitigen Beleuchtungsabschnitt (14b) aufweist, der an der Vorderflächenseite der Rutsche (6) installiert ist, und
sich zumindest der vorderseitige Beleuchtungsabschnitt (14b), das Lichtempfangsteil (15) und der Strahlenpfad in dem vorderseitigen Gehäuse (20) befinden.

8. Reisschälmaschine und Sortiermaschine, umfassend die optische Sortiervorrichtung (1) gemäß einem der Ansprüche 1 bis 7.

## Revendications

1. Dispositif de tri optique (1), comprenant :
une goulotte (6) comportant une fente de détection optique (12) et une fente de tri et d'élimination (13) disposée sur un côté aval de la fente de détection optique, un objet à trier s'écoulant vers le bas sur une surface avant de la goulotte ;
une unité d'inspection optique (7) comportant une partie d'éclairage (14) ayant une partie d'éclairage arrière (14a) installée sur un côté de surface arrière de la goulotte (6) et configurée pour émettre de la lumière vers l'objet à trier à travers une ouverture, une partie de réception de lumière (15) configurée pour recevoir au moins l'une d'une lumière transmise et d'une lumière réfléchie provenant de l'objet à trier de la lumière émise par la partie d'éclairage (14), et un trajet optique configuré pour envoyer au moins l'une de la lumière transmise et de la lumière réfléchie à la partie de réception de lumière, l'unité d'inspection optique (7) étant configurée pour inspecter l'objet à trier s'écoulant vers le bas sur la surface avant de la goulotte (6) ; et
une unité d'éjection (8) comportant une buse d'éjection (22) capable d'éjecter de l'air vers l'objet à trier s'écoulant vers le bas sur la surface avant de la goulotte (6), et configurée pour trier et retirer l'objet à trier sur la base d'un résultat d'inspection obtenu par l'unité d'inspection optique (7),
le dispositif de tri optique (1) étant **caractérisé en ce qu'**il comprend :
un élément de base fixé sur le côté de surface arrière de la goulotte (6), dans lequel
au moins la partie d'éclairage arrière (14a) et la buse d'éjection (22) sont fixées à l'élément de base, et l'élément de base est installé de telle sorte que l'ouverture de la partie d'éclairage arrière soit face à la fente de détection optique (12) et qu'une extrémité avant de la buse d'éjection soit face à la fente de tri et d'élimination (13), et
dans lequel l'élément de base ou la partie d'éclairage arrière (14a) comprend une saillie de positionnement à insérer dans la fente de détection optique (12) pour positionner l'élément de base sur la goulotte (6).

2. Dispositif de tri optique (1) selon la revendication 1, dans lequel l'élément de base ou la buse d'éjection (22) comprend une saillie de positionnement à insérer dans la fente de tri et d'élimination (13) pour positionner l'élément de base sur la goulotte (6).

3. Dispositif de tri optique (1) selon la revendication 1 ou 2, dans lequel
l'élément de base est un boîtier arrière (28),
l'unité d'éjection (8) comporte la buse d'éjection (22), un collecteur (23) configuré pour distribuer de l'air à haute pression à la buse d'éjection et une vanne électromagnétique (24) configurée pour contrôler la distribution du collecteur sur la base du résultat d'inspection obtenu par l'unité d'inspection optique (7), et
la partie d'éclairage arrière (14a), la buse d'éjection (22) et le collecteur (23) sont stockés dans le boîtier arrière (28) et la vanne électromagnétique (24) est fixée à une surface extérieure du boîtier arrière.

4. Dispositif de tri optique (1) selon la revendication 3, dans lequel
une pièce en saillie s'étend sur la surface extérieure du boîtier arrière (28),
la vanne électromagnétique (24) est munie d'une butée de mise en prise, et
la butée de mise en prise est amenée en prise par encliquetage avec la pièce en saillie pour fixer la vanne électromagnétique (24) à la surface extérieure du boîtier arrière (28).

5. Dispositif de tri optique (1) selon la revendication 1 ou la revendication 2, dans lequel
l'élément de base est un boîtier arrière (28),
l'unité d'éjection (8) comporte la buse d'éjection (22), un collecteur (23) configuré pour distribuer de l'air à haute pression à la buse d'éjection, et une vanne électromagnétique (24) configurée pour contrôler la distribution du collecteur sur la base du résultat d'inspection obtenu par l'unité d'inspection optique (7), et
la partie d'éclairage arrière (14a) et la buse d'éjection (22) sont stockées dans le boîtier arrière (28) et la buse d'éjection est couplée au collecteur (23) et à la vanne électromagnétique (24) installée à l'extérieur du boîtier arrière (28) avec un tuyau d'air (35).

6. Dispositif de tri optique (1) selon l'une quelconque des revendications 1 à 5, dans lequel
la partie d'éclairage arrière (14a) comporte une source lumineuse (18) et un réflecteur (19) configuré pour réfléchir la lumière rayonnée par la source de lumière vers la fente de détection optique (12), et
la source lumineuse (18), le réflecteur (19) et la buse d'éjection (22) sont disposés dans un ordre présenté depuis un côté amont de la goulotte (6).

7. Dispositif de tri optique (1) selon l'une quelconque des revendications 1 à 6, comprenant :
un boîtier avant (20) sur un côté de surface avant de la goulotte (6), dans lequel
la partie d'éclairage (14) comporte une partie d'éclairage avant (14b) installée sur le côté de surface avant de la goulotte (6), et
au moins la partie d'éclairage avant (14b), la partie de réception de lumière (15) et le trajet optique sont stockés dans le boîtier avant (20).

8. Machine de décorticage et de tri du riz comprenant le dispositif de tri optique (1) selon l'une quelconque des revendications 1 à 7.
